(19) Europäisches Patentamt
European Patent Office
Office européen des brevets

(11) Veröffentlichungsnummer: **0 318 785 B1**

(12) **EUROPÄISCHE PATENTSCHRIFT**

(45) Veröffentlichungstag der Patentschrift: **13.01.93**

(51) Int. Cl.5: **C09B 62/51**, C09B 62/085, C09B 62/245, D06P 1/38

(21) Anmeldenummer: **88119296.7**

(22) Anmeldetag: **21.11.88**

Die Akte enthält technische Angaben, die nach dem Eingang der Anmeldung eingereicht wurden und die nicht in dieser Patentschrift enthalten sind.

# (54) Reaktivfarbstoffe.

(30) Priorität: **01.12.87 DE 3740649**

(43) Veröffentlichungstag der Anmeldung:
**07.06.89 Patentblatt 89/23**

(45) Bekanntmachung des Hinweises auf die Patenterteilung:
**13.01.93 Patentblatt 93/02**

(84) Benannte Vertragsstaaten:
**CH DE FR GB LI**

(56) Entgegenhaltungen:
**EP-A- 0 040 806**
**EP-A- 0 111 288**
**EP-A- 0 111 830**
**EP-A- 0 126 025**
**EP-A- 0 177 445**

(73) Patentinhaber: **BAYER AG**

**W-5090 Leverkusen 1 Bayerwerk(DE)**

(72) Erfinder: **Henk, Hermann, Dr.**
**Roggendorfstrasse 55**
**W-5000 Köln 80(DE)**
Erfinder: **Herd, Karl-Josef, Dr.**
**Am Gartenfeld 66**
**W-5068 Odenthal(DE)**
Erfinder: **Stöhr, Frank-Michael, Dr.**
**Am Thelen Siefen 10**
**W-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Gegenstand der Erfindung sind faserreaktive Azofarbstoffe der Formel (1)

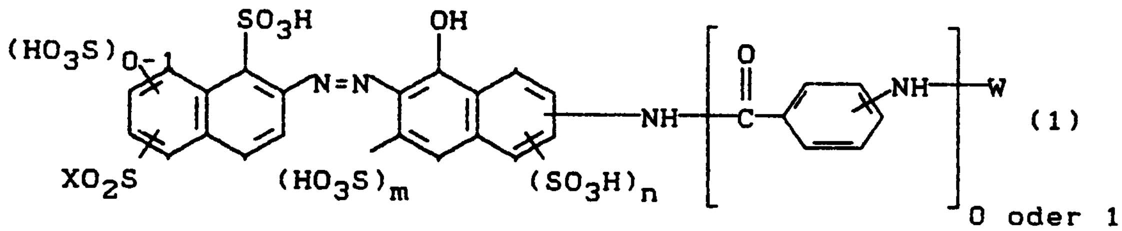

(1)

worin

m = 0 oder 1,
n = 0 oder 1, wobei m + n = 1 oder 2,
X = Vinyl, $CH_2CH_2$-Y, wobei Y einen unter alkalischen Bedingungen abspaltbaren Rest darstellt,
W = Rest der Formel

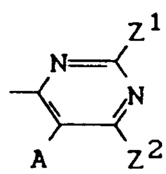

(2) oder

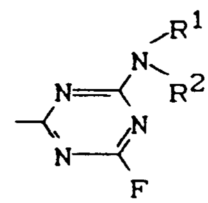

(3)

worin

A = H, Cl, Br, CN oder $C_1$-$C_4$-Alkylsulfonyl,
$Z^1$, $Z^2$ = unabhängig voneinander H, Cl, Br, F oder $C_1$-$C_4$-Alkylsulfonyl, wobei $Z^1$ und $Z^2$ nicht gleichzeitig für H oder $C_1$-$C_4$-Alkylsulfonyl stehen,
$R^1$ = H oder ein gegebenenfalls substituierter $C_1$-$C_4$-Alkyl- bzw. cycloaliphatischer Rest, und
$R^2$ = $R^1$ oder ein gegebenenfalls substituierter Benzyl-, Naphthyl- oder Hetarylrest, ein gegebenenfalls substituierter Phenylrest, der frei von $SO_3H$- oder $SO_2X$-Gruppen ist, oder eine gegebenenfalls substituierte Aminogruppe.

Aus EP-A-111 830, 126 025, 40 806 und 111 288 sind bereits Reaktivfarbstoffe bekannt, die sich zum Färben von hydroxy- und/oder carbonamidgruppenhaltigen Materialien eignen. Die bekannten Verbindungen weisen aber noch anwendungstechnische Mängel auf.

Beispiele für Reste Y sind: $OSO_3H$, $SSO_3H$, $OCOCH_3$, $OPO_3H_2$, $OSO_2CH_3$, SCN, $NHSO_2CH_3$, Cl, Br, F, $OCOC_6H_5$,$OSO_2$-$C_6H_4$-$CH_3$, $N(CH_3)_3^{\oplus}Cl^{\ominus}$.

Beispiele für Pyrimidinreste W der Formel (2) sind: 2,4-Dichlor-6-pyrimidinyl-,2,4,5-Trichlor-6-pyrimidinyl-, 2-Fluor-4-pyrimidinyl-, 2,4-Dichlor-5-cyan-6-pyrimidinyl-, 2,4-Dichlor-5-methylsulfonyl-6-pyrimidinyl-, 2,6-Difluor-5-chlor-4-pyrimidinyl-, 2,6-Difluor-5-methylsulfonyl-4-pyrimidinyl-, 2,6-Difluor-4-pyrimidinyl-, 5-Chlor-2-fluor-6-methylsulfonyl-4-pyrimidinyl, 2,5-Dichlor-6-fluor-4-pyrimidinyl- sowie 6-Fluor-5-chlor-4-pyrimidinyl-Reste.

Als Substituenten für die Reste $R^1$ und $R^2$ kommen insbesondere OH, Cl, Br, F, CN, $CO_2H$, $SO_3H$, $OSO_3H$, $C_1$-$C_4$-Alkoxy, $C_1$-$C_4$-Alkyl, $N(CH_3)_2$, $NHCOCH_3$, $SO_2X$ sowie mit $SO_2X$ substituiertes $C_1$-$C_4$-Alkoxy in Frage, wobei die Phenylreste frei von $SO_3H$ und $SO_2X$-Gruppen sind.

Bevorzugt sind faserreaktive Azofarbstoffe der Formeln

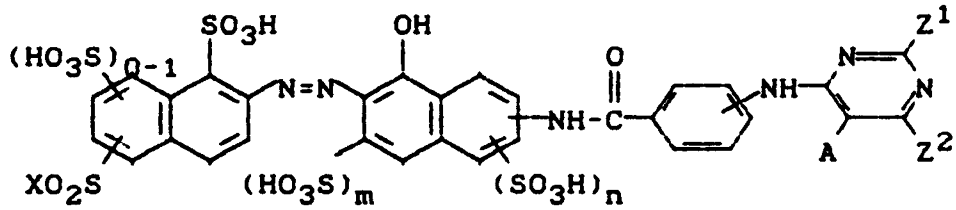

(4)

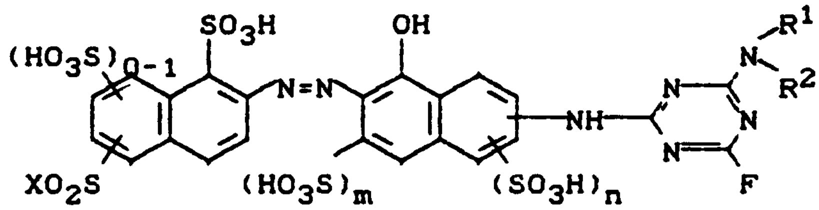

(5)

Besonders bevorzugt sind Farbstoffe der Formeln

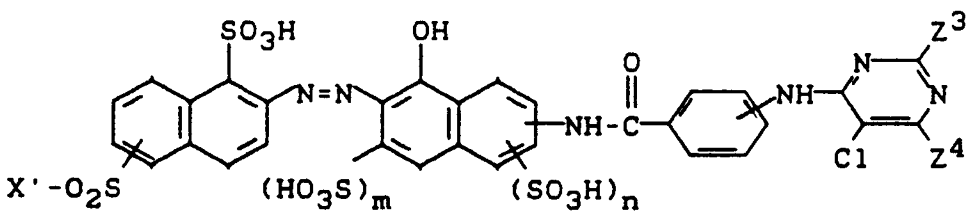

(6)

und

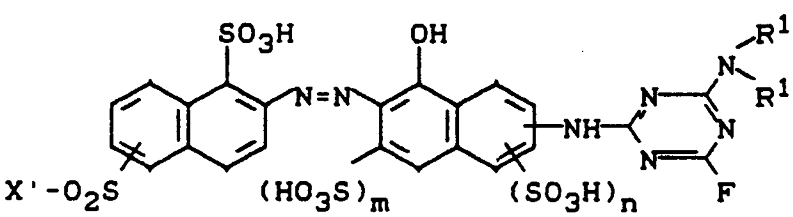

(7)

worin

X' = Vinyl oder $CH_2CH_2OSO_3H$

$Z^3$, $Z^4$ = unabhängig voneinander Cl oder F bedeutet.

Besonders hervorzuheben sind Farbstoffe der Formeln (8) bis (16), in denen D für

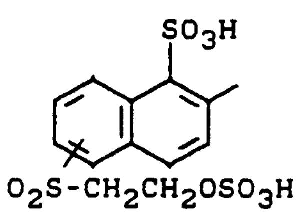

bzw.

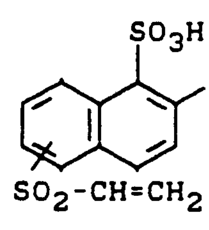

und W' für

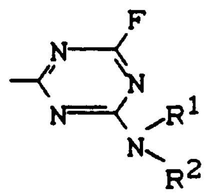

steht,
wobei $R^1$ und $R^2$ die in Formel (1) angegebene Bedeutung haben:

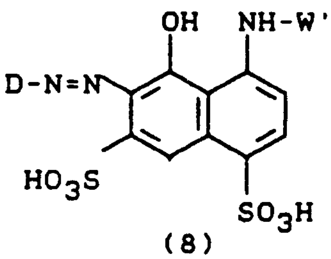

(8)

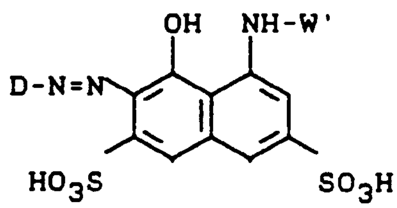

(9)

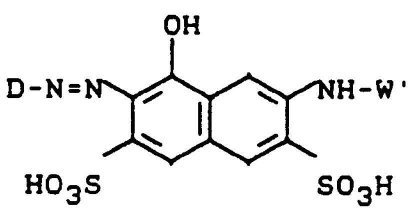

(10)

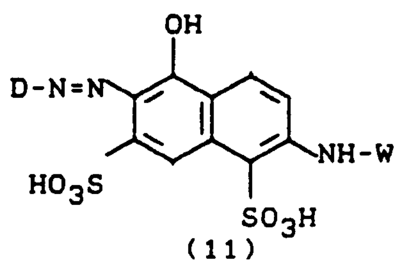

(11)

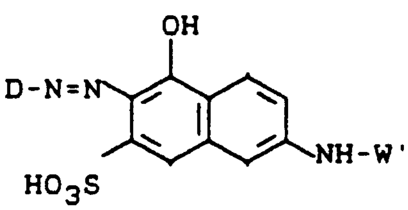

(12)

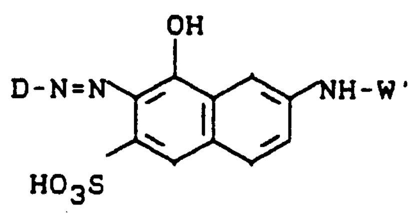

(13)

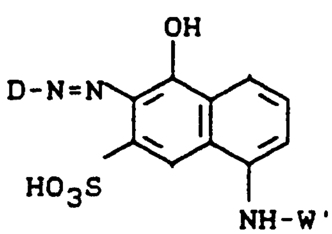

(14)

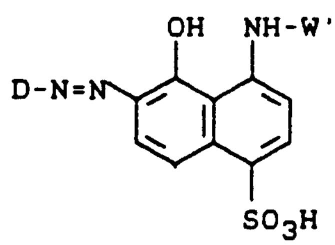

(15)

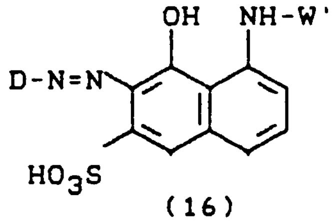

(16)

Ganz generell bevorzugt im Rahmen der Farbstoffe (8) bis (16) sind solche mit $R^2 = R^1$.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungstabilität sowie durch eine hervorragende Stabilität gegenüber Oxidationsmitteln, wie peroxyd-oder chlorhaltige Waschmittel, aus. Die Auswaschbarkeit der beim Färben oder Druck nur in geringem Maße entstehenden Hydrolyseprodukte ist ausgezeichnet. Die Farbstoffe besitzen gute Naßechtheiten.

Die erfindungsgemäßen Farbstoffe sind nach den bei der Synthese von Reaktivfarbstoffen üblichen Herstellungsverfahren zugänglich.

So z.B. durch Diazotieren von Aminen der Formel

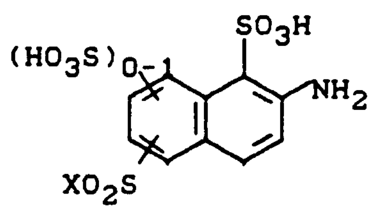

(17)

und Kuppeln der resultierenden Diazoniumverbindungen mit Hydroxynaphthalinsulfonsäuren der Formel (18).

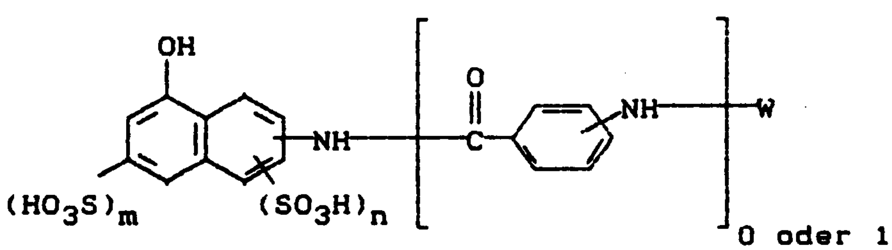

(18)

Die Darstellung der Zwischenprodukte (18) erfolgt beispeilsweise, indem man Aminonaphthol-mono- bzw. -disulfonsäuren oder (Aminobenzoyl)aminonaphthol-mono- bzw. -disulfonsäuren an der Aminfunktion nach bekannten Methoden (z. B. EP 40 806, DOS 27 11 150, EP 172 790, DOS 27 47 011) mit Trifluortriazin kondensiert und die resultierenden Difluortriazinylverbindungen mit Aminen $HNR^1R^2$ in Gegenwart säurebindender Mittel umsetzt oder aber mit halogenhaltigen Pyrimidinen kondensiert (vgl. EP 69 703, DOS 2 623 252, EP 133 843).

Einzelheiten können den nachfolgenden Beispielen entnommen werden. Beispiele für die Diazokomponenten (17) sind:

2-Amino-6-(2-sulfatoethylsulfonyl)(bzw. vinylsulfonyl)naphthalin-1-sulfonsäure
2-Amino-5-(2-sulfatoethylsulfonyl)(bzw. vinylsulfonyl)naphthalin-1-sulfonsäure
2-Amino-5-(2-sulfatoethylsulfonyl)(bzw. vinylsulfonyl)naphthalin-1,7-disulfonsäure.

Eine weitere Möglichkeit, die Farbstoffe der Formel (1) darzustellen, besteht darin, den auf üblichem Weg (Diazotierung und Kupplung) hergestellten Farbstoff der Formel

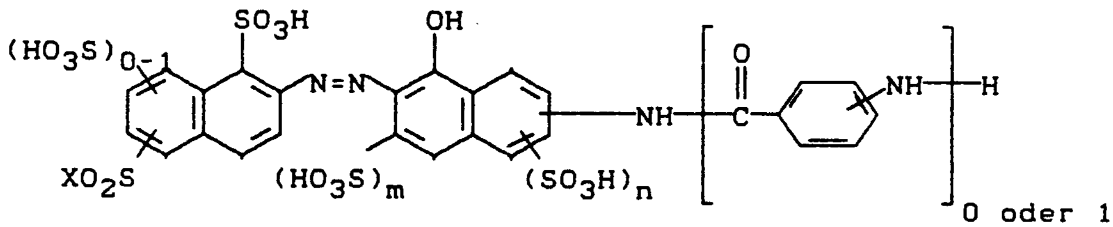

(19)

an der Aminfunktion entweder mit Trifluortriazin und anschließend mit Aminen $HNR^1R^2$ zu kondensieren oder aber nach bekannten Methoden mit halogenhaltigen Pyrimidinen umzusetzen.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Beispiel 1

44,2 g 2-Amino-6-(2-sulfatoethyl)sulfonyl-1-naphthalinsulfonsäure-mono-natriumsalz werden in 300 ml Wasser und 30 ml konzentrierter Salzsäure angerührt und mit 100 g Eis versetzt. Bei 5 bis 10° C versetzt man zügig mit 25 ml einer 30 %igen Natriumnitritlösung und rührt 30 Minuten nach. Durch Zugabe weniger ml Amidosulfonsäurelösung wird der Nitritüberschuß entfernt. Diese Diazotierungsmischung dosiert man zu einer neutralen Lösung von 58,7 g einer Verbindung der Formel

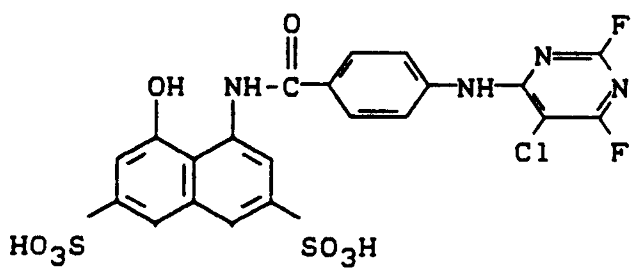

in 300 ml Wasser und hält dabei den pH-Wert mit 20 %iger Sodalösung konstant bei 7,0 bis 7,5. Es wird eine Stunde gerührt, mit 70 g Kochsalz ausgesalzen und abgesaugt. Nach dem Trocknen erhält man 112 g eines dunkelroten Pulvers.

Der isolierte Farbstoff hat die Formel

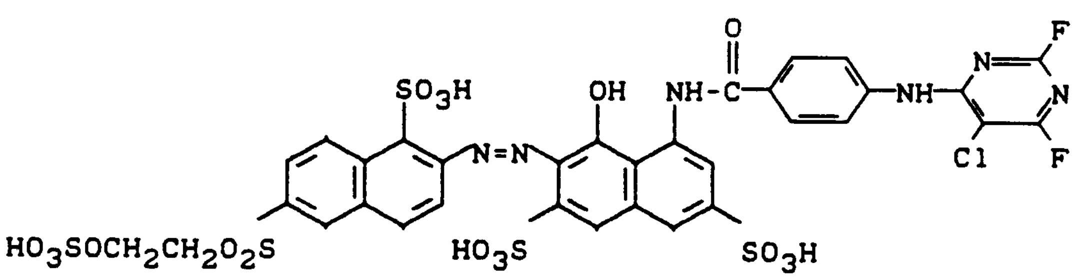

und färbt Baumwolle in brillantem blaustichig rotem Farbton ($\lambda_{max}$ = 520; 542 nm (in $H_2O$)).

Beispiel 2

Ersetzt man in Beispiel 1 die reaktivgruppenhaltige Kupplungskomponente durch das entsprechende ortho-verknüpfte (2-Aminobenzoyl)amino-Derivat, so erhält man einen ebenfalls wertvollen roten Reaktivfarbstoff der Formel

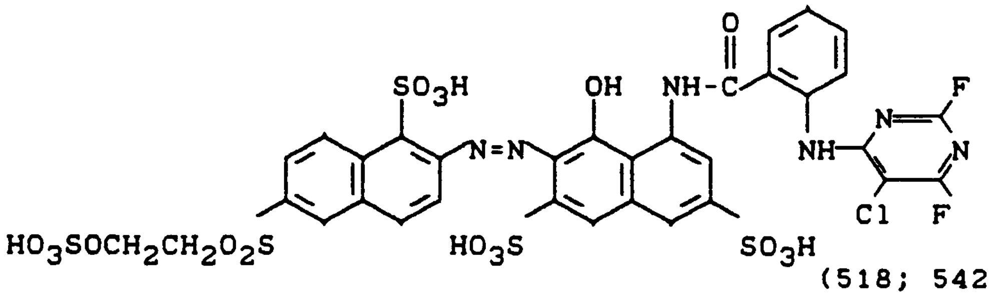

(518; 542 nm)

Beispiel 3

Verwendet man in Beispiel 1 anstelle der Diazokomponente 2-Amino-6-(2-sulfatoethyl)sulfonyl-1-naphthalinsulfonsäure nun 2-Amino-5-(2-sulfatoethyl)sulfonyl-1-naphthalinsulfonsäure, so resultiert ein Farbstoff der Formel

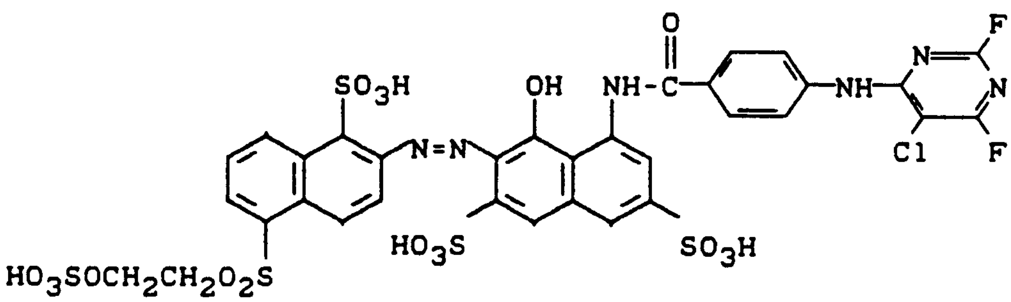

Nach der Synthesevorschrift des Beispiels 1 lassen sich auch folgende faserreaktive blaustichig rote Farbstoffe herstellen:

Bsp. 4

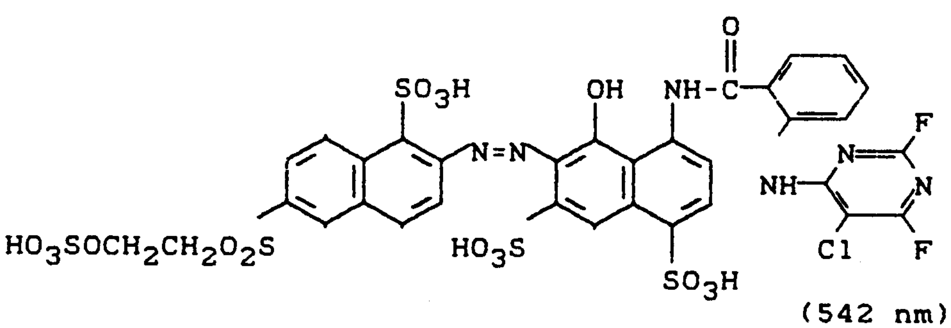

(542 nm)

Bsp. 5

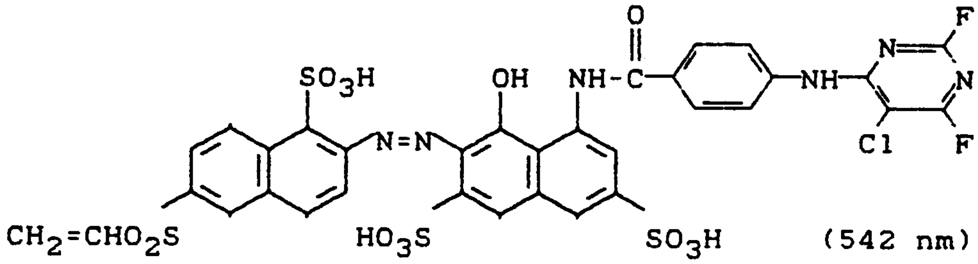

(542 nm)

Bsp. 6

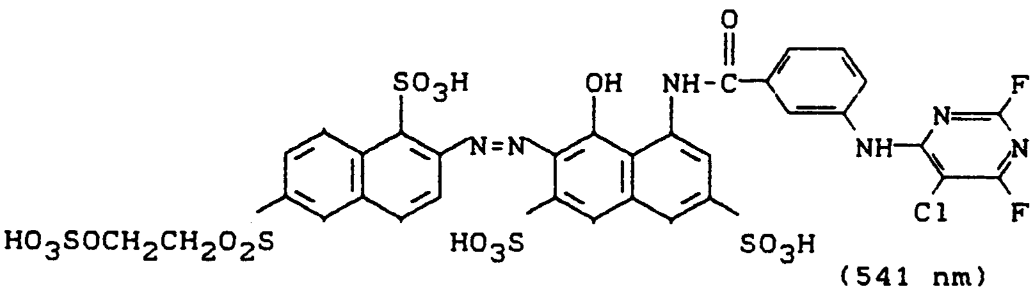

(541 nm)

Beispiel 7

31,8 g 8-Amino-1-hydroxy-3,6-naphthalindisulfonsäure werden bei 40 bis 45° C und pH 4,0 bis 5,5 mit 22 g 2,4,5,6-Tetrachlorpyrimidin kondensiert und das Kondensationsprodukt mit der analog Beispiel 1 diazotierten 2-Amino-6-(2-sulfatoethyl)sulfonyl-1-naphthalinsulfonsäure bei pH 6 bis 7 in Gegenwart von Kaliumhydrogencarbonat angekuppelt. Nach Isolieren und Trocknen erhält man einen Farbstoff der Formel

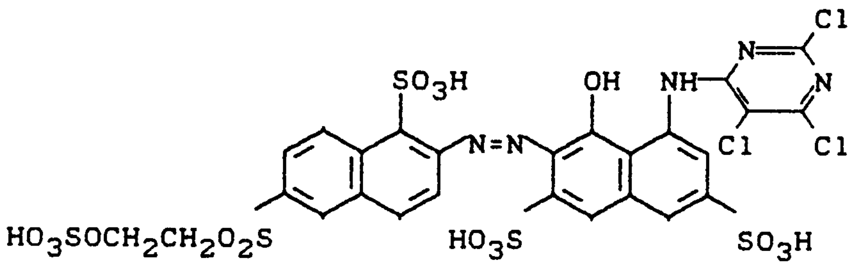

der Baumwolle in blaustichig roten Nuancen färbt (544 nm).

Ganz analog werden auch die Farbstoffe der folgenden Beispiele 8 bis 34 synthetisiert.

Tabelle 1

Farbstoffe der Formel

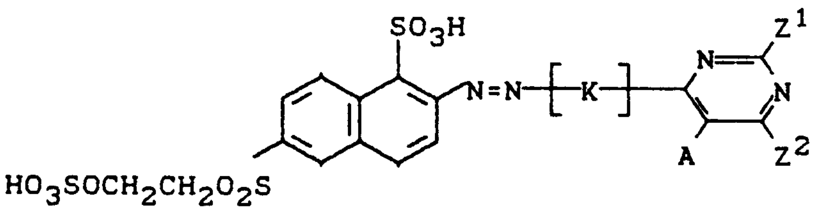

| Beispiel | K | A | $Z^1$ | $Z^2$ | Farbton |
|---|---|---|---|---|---|
| 8 | 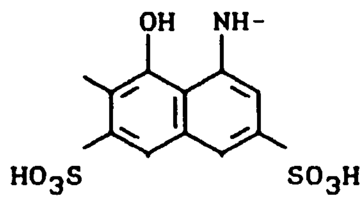 | CN | Cl | Cl | blaustichig rot |
| 9 | " | Cl | F | F | " |
| 10 | " | Cl | H | F | " |
| 11 | " | Cl | F | $SO_2CH_3$ | " |
| 12 | " | H | Cl | Cl | " |
| 13 | " | $SO_2CH_3$ | F | F | " |
| 14 | " | Br | F | F | " |
| 15 | 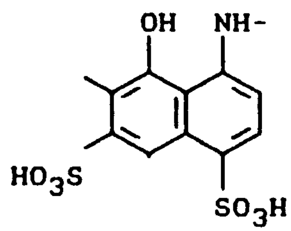 | Cl | Cl | Cl | " |

| Beispiel | K | A | $Z^1$ | $Z^2$ | Farbton |
|---|---|---|---|---|---|
| 16 | 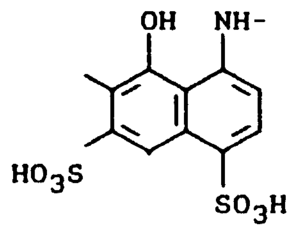 | Cl | F | F | blaustichig rot |
| 17 | " | Cl | H | F | " |
| 18 | " | CN | Cl | Cl | " |
| 19 | 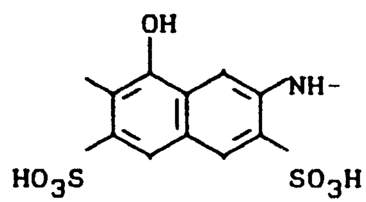 | Cl | Cl | Cl | rot |
| 20 | " | Cl | F | F | " |
| 21 | 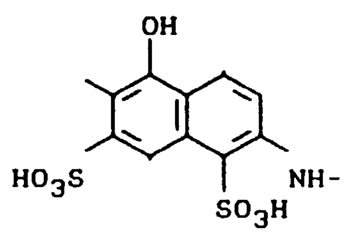 | Cl | Cl | Cl | scharlach |
| 22 | " | Cl | F | F | " |

| Beispiel | K | A | $Z^1$ | $Z^2$ | Farbton |
|---|---|---|---|---|---|
| 23 | 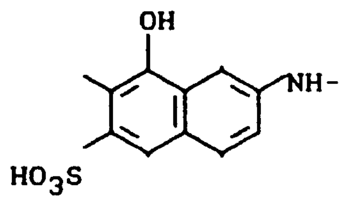 | Cl | Cl | Cl | rot |
| 24 | " | Cl | F | F | " |
| 25 | " | Cl | H | F | " |
| 26 | " | CN | Cl | Cl | " |
| 27 | 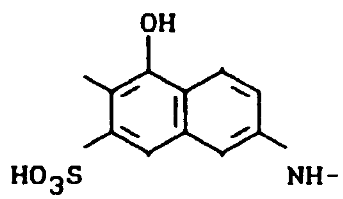 | Cl | Cl | Cl | orange |
| 28 | " | Cl | F | F | " |
| 29 | " | Cl | H | F | " |
| 30 | " | CN | Cl | Cl | " |

| Beispiel | K | A | $Z^1$ | $Z^2$ | Farbton |
|---|---|---|---|---|---|
| 31 | 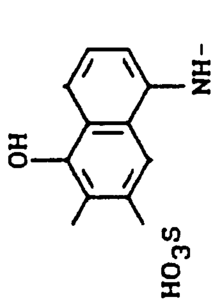 | Cl | F | F | rot |
| 32 | 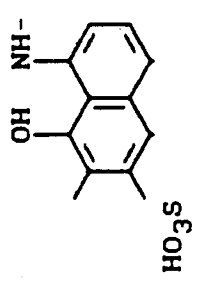 | Cl | Cl | Cl | blaustichig rot |
| 33 | " | Cl | F | F | " |
| 34 | 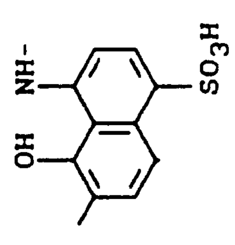 | Cl | F | F | " |

Beispiel 35

34,1 g Mono-Natriumsalz der 1-Hydroxy-8-aminonaphthalin-3,6-disulfonsäure werden in 150 ml Wasser unter einer $N_2$-Schutzgasatmosphäre angerührt und durch Zugabe von 7,7 g 2-(N-Methylamino)ethanol gelöst (pH 6,5). Man fügt 5 g Natriumfluorid hinzu und kühlt die Lösung durch Zugabe von 100 g Eis auf 0°

C ab. Es wird mit 8,8 ml Trifluortriazin versetzt, wobei der pH auf 4,5 abfällt. Mit ca. 5 ml 20 %iger Sodalösung hält man den pH-Wert konstant bei 4,5. Nach 10 Minuten bei 0 bis 5° C erhöht man innerhalb von weiteren 10 Minuten den pH-Wert durch Zutropfen von Sodalösung auf 6,5 bis 7,0. Danach kristallisiert das zweifache Kondensationsprodukt der Formel

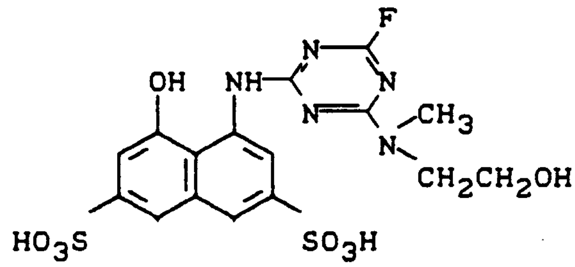

aus. Zu dieser Mischung dosiert man nun die analog Beispiel 1 diazotierte 2-Amino-6-(2-sulfatoethyl)-sulfonyl-1-naphthalinsulfonsäure und hält den pH mit Sodalösung konstant bei 6,5 bis 7,5. Der Farbstoff, dem die Struktur

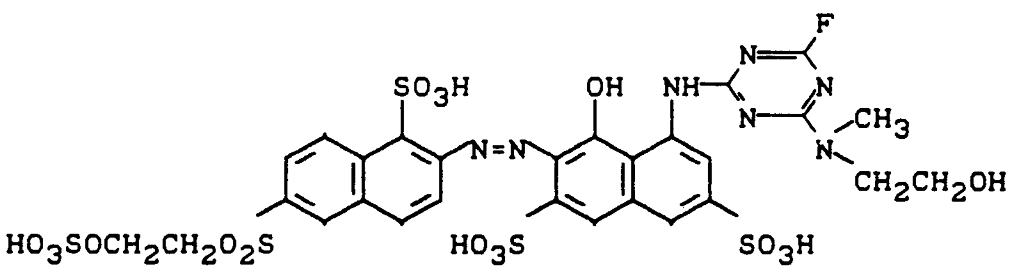

zukommt, wird mit 70 g Kochsalz und 70 g Kaliumchlorid ausgesalzen, isoliert und getrocknet. Er färbt Baumwolle in brillanten blaustichig roten Tönen ($\lambda_{max}$ = 518; 544 (sh) nm).

Beispiel 36

Ersetzt man in Beispiel 35 die 2-Amino-6-(2-sulfatoethyl)sulfonyl-1-naphthalinsulfonsäure durch die 2-Amino-5-(2-sulfatoethyl)sulfonyl-1-naphthalinsulfonsäure, so erhält man einen ebenfalls wertvollen Rotfarbstoff der Formel

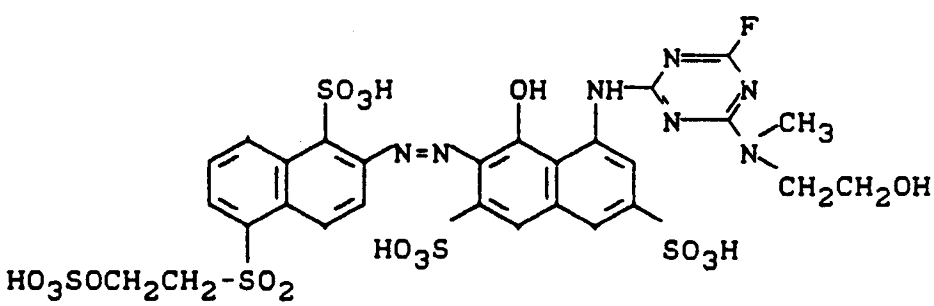

Durch Variation der Kupplungskomponente bzw. des aliphatischen Amins in Beispiel 35 gelangt man nach der oben angegebenen Arbeitsweise zu den Farbstoffen der Beispiele 37 bis 102:

Tabelle 2

Farbstoffe der Formel

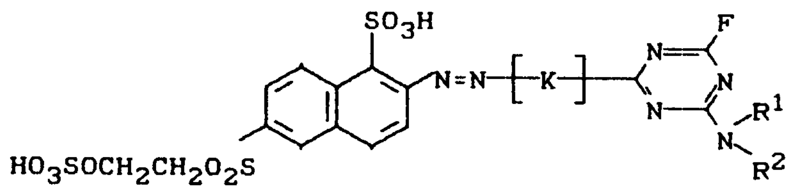

| Beispiel | K | R1 | $R^2$ | Farbton |
|---|---|---|---|---|
| 37 | 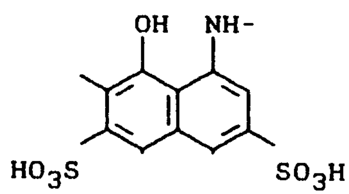 | H | H | blaustichig rot |
| 38 | " | H | $CH_3$ | " |
| 39 | " | H | $CH_2CH3$ | " |
| 40 | " | H | $CH_2CH_2OH$ | " |
| 41 | " | H | $CH_2CH_2OCH_3$ | " |
| 42 | " | $CH_3$ | $CH_3$ | " |

Tabelle 2 (Fortsetzung)

| Beispiel | K | R1 | $R^2$ | Farbton |
|---|---|---|---|---|
| 43 | 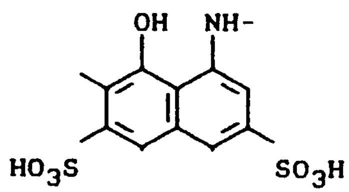 | $C_2H_5$ | $C_2H_5$ | blaustichig rot |
| 44 | " | $CH_3$ | $CH_2SO_3H$ | " |
| 45 | " | $CH_3$ | $CH_2CH_2CN$ | " |
| 46 | " | H | $(CH_2)_2-CH_3$ | " |
| 47 | " | H | $(CH_2)_3-CH_3$ | " |
| 48 | " | H | $C(CH_3)_3$ | " |
| 49 | " | H | $CH_2CO_2H$ | " |
| 50 | " | H | $(CH_2)_3-N(CH_3)_2$ | " |
| 51 | " | H | $(CH2)_2-SO_2CH_2CH_2Cl$ | " |

Tabelle 2 (Fortsetzung)

| Beispiel | K | R1 | $R^2$ | Farbton |
|---|---|---|---|---|
| 52 | 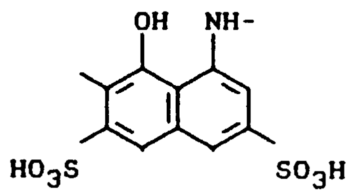 | H | $(CH_2)_2$-O-$(CH_2)_2$-$SO_2$-CH=$CH_2$ | blaustichig rot |
| 53 | " | $CH_2CH_2OH$ | $CH_2CH_2OH$ | " |
| 54 | " | H | $CH_2$-CH(OH)-$CH_3$ | " |
| 55 | " | $(CH_2)_2$-$SO_2CH_2CH_2Cl$ | $(CH_2)_2$-$SO_2CH_2CH_2Cl$ | " |
| 56 | " | H | 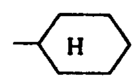 | " |
| 57 | " | H | $CH_2$ 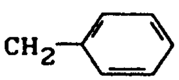 | " |
| 58 | " | H | 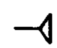 | " |

<u>Tabelle 2</u> (Fortsetzung)

| Beispiel | K | R1 | $R^2$ | Farbton |
|---|---|---|---|---|
| 59 | 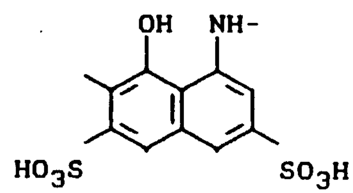 | H | $NH_2$ | blaustichig rot |
| 60 | " | H | $N(CH_3)_2$ | " |
| 61 | 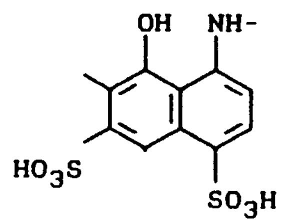 | H | $C_2H_5$ | " |
| 62 | " | $C_2H_5$ | $C_2H_5$ | " |
| 63 | " | $CH_3$ | $CH_2CH_2OH$ | " |
| 64 | " | H | $CH_2CH_2CH_2OH$ | " |
| 65 | " | H | $CH_2CH_2OCH_3$ | " |

**Tabelle 2** (Fortsetzung)

| Beispiel | K | R1 | $R^2$ | Farbton |
|---|---|---|---|---|
| 66 | 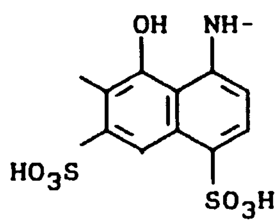 | H | $(CH_2)_3-OCH_3$ | blaustichig rot |
| 67 | " | H | $CH_2CH_2SO_3H$ | " |
| 68 | " | H | $CH_2CH_2OH$ | " |
| 69 | " | H | $CH_2CH(CH_3)_2$ | " |
| 70 | " | $CH_2CH_2OH$ | $CH_2CH_2OH$ | " |
| 71 | " | $CH_2CH_2OH$ | 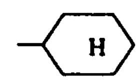 | " |

<u>Tabelle 2</u> (Fortsetzung)

| Beispiel | K | R1 | $R^2$ | Farbton |
|---|---|---|---|---|
| 72 | 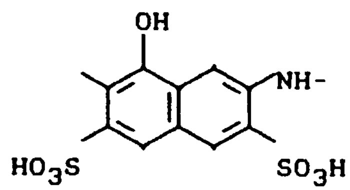 | $CH_3$ | $CH_3$ | blaustichig rot |
| 73 | " | $CH_3$ | $CH_2CH_2OH$ | " |
| 74 | " | H | $(CH_2)_3-OCH_3$ | " |
| 75 | 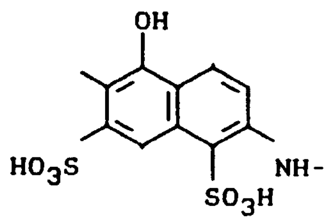 | H | H | scharlach |
| 76 | " | H | $C_2H_5$ | " |
| 77 | " | $CH_3$ | $CH_2CH_2OH$ | " |
| 78 | " | H | $CH_2CH_2OCH_3$ | " |
| 79 | " | $CH_3$ | 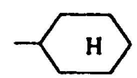 | " |

Tabelle 2 (Fortsetzung)

| Beispiel | K | R1 | $R^2$ | Farbton |
|---|---|---|---|---|
| 80 | 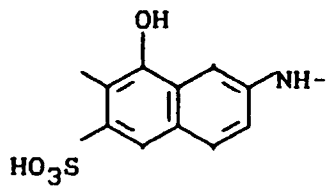 | H | $CH_2CH_2OH$ | rot |
| 81 | " | $CH_3$ | $CH_2CH_2OH$ | " |
| 82 | " | $CH_3$ | $CH_2SO_3H$ | " |
| 83 | " | H | $CH_2CH_2OSO_3H$ | " |
| 84 | " | H | $CH_2CH_2OCH_3$ | " |
| 85 | " | $CH_2CH_2OH$ | $CH_2CH_2OH$ | " |
| 86 | 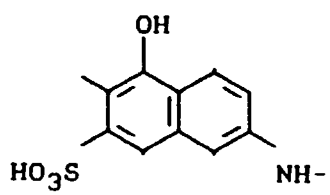 | H | H | orange |

<u>Tabelle 2</u> (Fortsetzung)

| Beispiel | K | R1 | $R^2$ | Farbton |
|---|---|---|---|---|
| 87 | 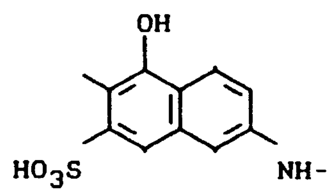 | $CH_3$ | H | orange |
| 88 | " | $CH_3$ | $CH_3$ | " |
| 89 | " | H | $CH_2CH_2OH$ | " |
| 90 | " | $CH_3$ | $CH_2CH_2OH$ | " |
| 91 | " | H | $CH_2CH_2CH_2OCH_3$ | " |
| 92 | " | $CH_3$ | $CH_2CH_2OCH_3$ | " |
| 93 | " | $CH_3$ | $CH_2SO_3H$ | " |
| 94 | " | H | $CH_2CH_2SO_3H$ | " |
| 95 | " | H | $CH_2CO_2H$ | " |

<u>Tabelle 2</u> (Fortsetzung)

| Beispiel | K | R1 | $R^2$ | Farbton |
|---|---|---|---|---|
| 96 | 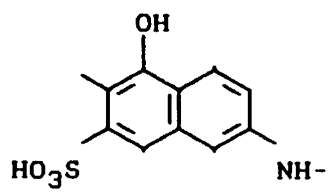 | H | $CH_2CH_2CH_2SO_2CH_2CH_2Cl$ | orange |
| 97 | " | $CH_2CH_2SO_2CH_2CH_2Cl$ | $CH_2CH_2SO_2CH_2CH_2Cl$ | " |
| 98 | " | H | $CH_2CH_2CH_2OH$ | " |
| 99 | " | H | $CH_2CH(OH)-CH_3$ | " |
| 100 | 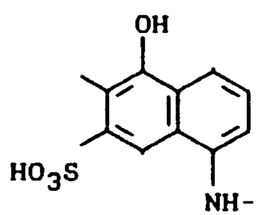 | $CH_3$ | $CH_2CH_2OH$ | rot |

Tabelle 2 (Fortsetzung)

| Beispiel | K | R1 | $R^2$ | Farbton |
|---|---|---|---|---|
| 101 | 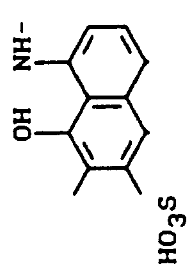 | H | $CH_2CH_2OH$ | blaustichig rot |
| 102 | 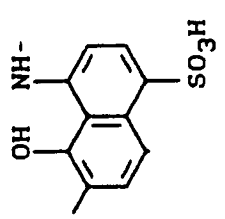 | $CH_3$ | $CH_2SO_3H$ | " |

Beispiel 103

31,9 g 1-Hydroxy-8-aminonaphthalin-3,6-disulfonsäure werden in 400 ml Wasser neutral gelöst. Bei 0 bis 5° C versetzt man mit 8,8 ml Trifluortriazin und hält durch Zugabe von 20 %iger Natriumcarbonatlösung einen pH-Wert von 4,0 bis 4,5. Nach 5 Minuten gibt man 15,5 g 4-(2'-Hydroxyethoxy)anilin hinzu und

hält mit Sodalösung den pH-Wert bei 6,5 bis 7,0. Nach 10 Minuten bei 10° C ist die Reaktion beendet. Die so erhaltene Reaktionsmischung der Verbindung der Formel

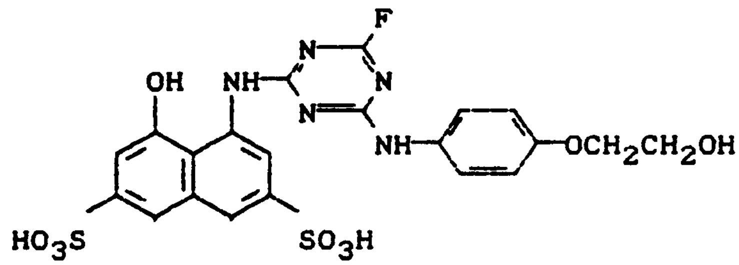

wird bei 5° C mit einer nach Beispiel 1 hergestellten Diazoniumsalz-Suspension der 2-Amino-6-(2-sulfatoethyl)sulfonyl-1-naphthalinsulfonsäure gekuppelt. Gleichzeitig wird der pH mit Sodalösung bei 7,0 bis 7,5 gehalten. Der Farbstoff der Formel

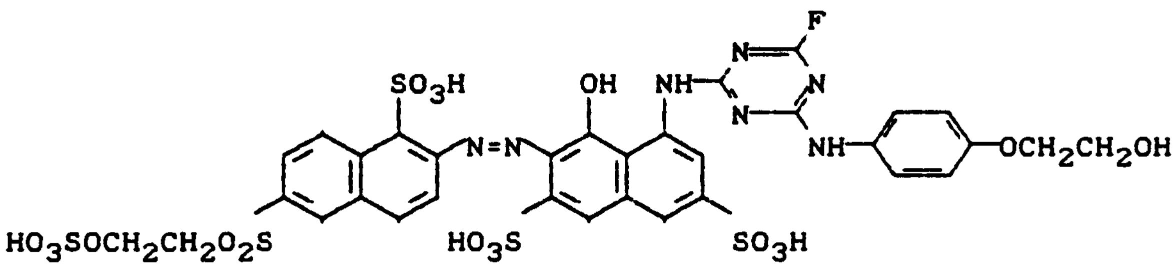

wird ausgesalzen, abgesaugt, getrocknet und gemahlen. Das dunkelrote Farbstoffpulver färbt Baumwolle in brillantem blaustichigem Rot (546 nm).

Durch Variation der Kupplungskomponente bzw. der Aminkomponente sind nach der Arbeitsvorschrift von Beispiel 103 die Farbstoffe der folgenden Beispiele 104 bis 138 erhältlich.

<u>Tabelle 3</u>

Farbstoffe der Formel

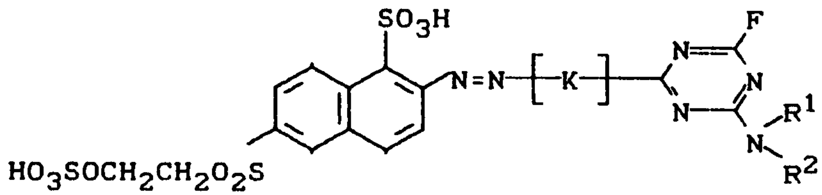

| Beispiel | K | R1 | $R^2$ | Farbton |
|---|---|---|---|---|
| 104 | 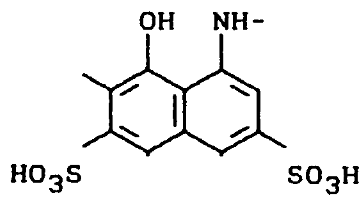 | H | 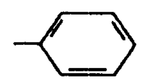 | blaustichig rot |
| 105 | " | $CH_3$ | 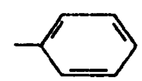 | " |
| 106 | " | H | 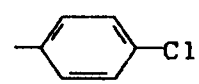 | " |

Tabelle 3 (Fortsetzung)

| Beispiel | K | R1 | $R^2$ | Farbton |
|---|---|---|---|---|
| 107 | 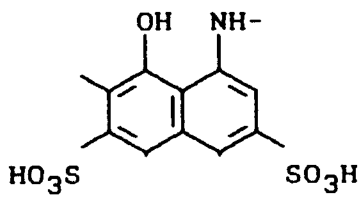 | H | 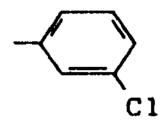 | blaustichig rot |
| 108 | " | $CH_2CH_2OH$ | 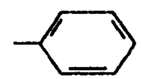 | " |
| 109 | " | H | 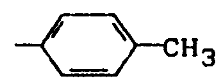 | " |
| 110 | " | H | 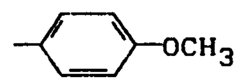 | " |
| 111 | " | H | 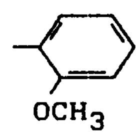 | " |

Tabelle 3 (Fortsetzung)

| Beispiel | K | R1 | $R^2$ | Farbton |
|---|---|---|---|---|
| 112 | 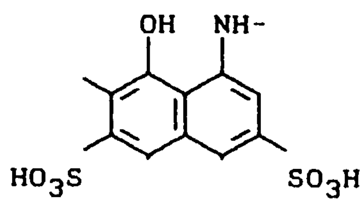 | H | 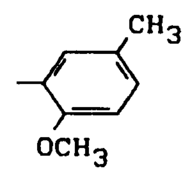 | blaustichig rot |
| 113 | " | H | 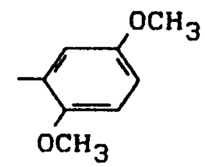 | " |
| 114 | " | H | 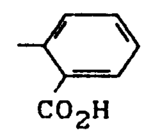 | " |
| 115 | " | H | 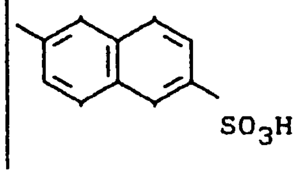 | " |

Tabelle 3 (Fortsetzung)

| Beispiel | K | R1 | $R^2$ | Farbton |
|---|---|---|---|---|
| 116 | 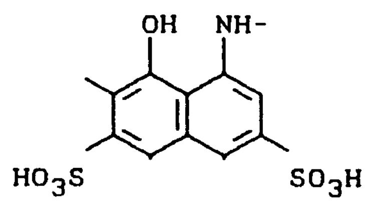 | H | 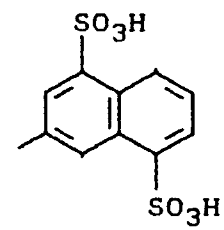 | blaustichig rot |
| 117 | " | H | 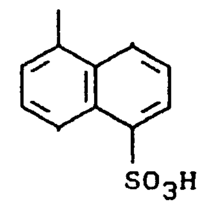 | " |
| 118 | " | H | 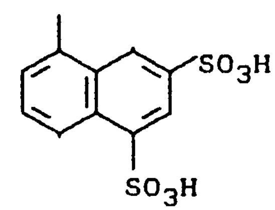 | " |

<u>Tabelle 3</u> (Fortsetzung)

| Beispiel | K | R1 | $R^2$ | Farbton |
|---|---|---|---|---|
| 119 | 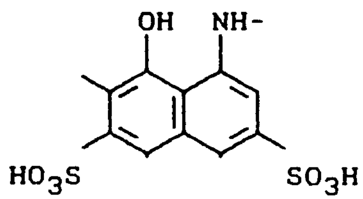 | H | 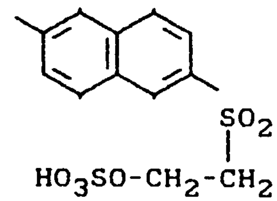 | blaustichig rot |
| 120 | " | H | 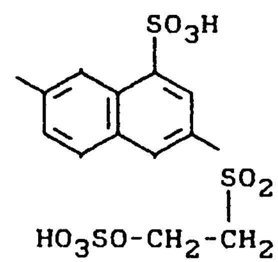 | " |
| 121 | " | H | 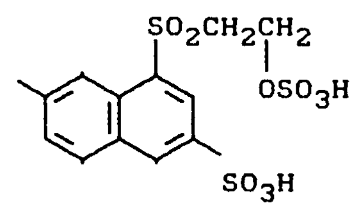 | " |

Tabelle 3 (Fortsetzung)

| Beispiel | K | R1 | $R^2$ | Farbton |
|---|---|---|---|---|
| 122 | 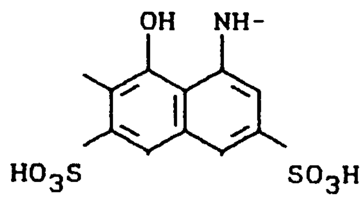 | H | 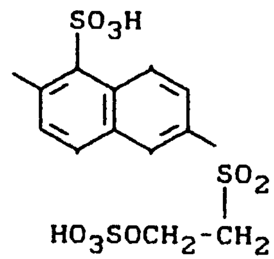 | blaustichig rot |
| 123 | 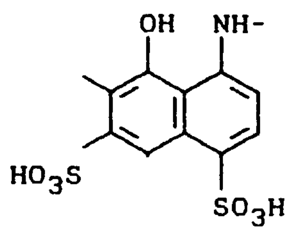 | H | 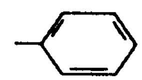 | " |
| 124 | " | $-CH_2CH_3$ | 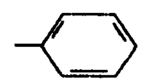 | " |
| 125 | " | $-CH_2CH_2OH$ | 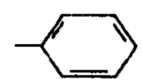 | " |

Tabelle 3 (Fortsetzung)

| Beispiel | K | R1 | $R^2$ | Farbton |
|---|---|---|---|---|
| 126 | 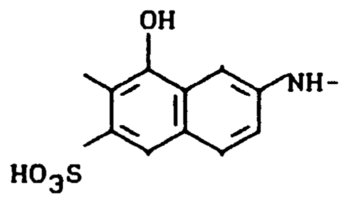 | H | 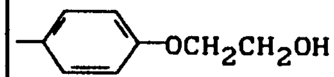 | rot |
| 127 | " | $CH_2SO_3H$ | 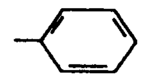 | " |
| 128 | " | H | 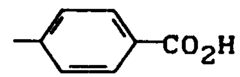 | " |
| 129 | " | H | 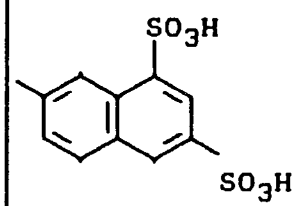 | " |
| 130 | " | H | 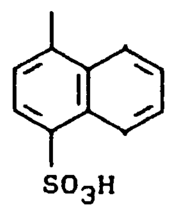 | " |

**Tabelle 3** (Fortsetzung)

| Beispiel | K | R1 | $R^2$ | Farbton |
|---|---|---|---|---|
| 131 | 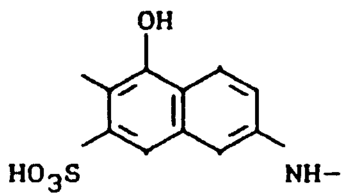 | H | 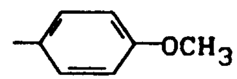 | orange |
| 132 | " | $CH_2CH_2OH$ | 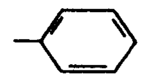 | " |
| 133 | " | H | 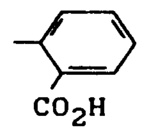 | " |
| 134 | " | H | 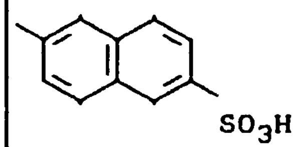 | " |
| 135 | " | H | 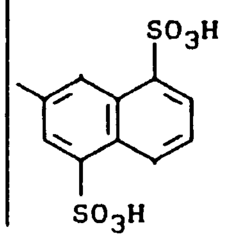 | " |

Tabelle 3 (Fortsetzung)

| Beispiel | K | R1 | $R^2$ | Farbton |
|---|---|---|---|---|
| 136 | 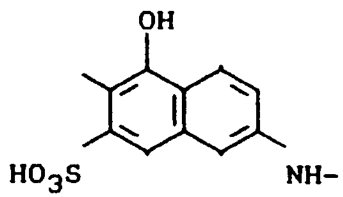 | H | 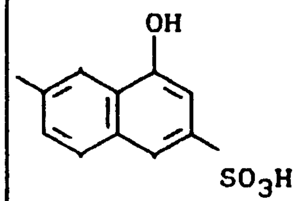 | " |
| 137 | 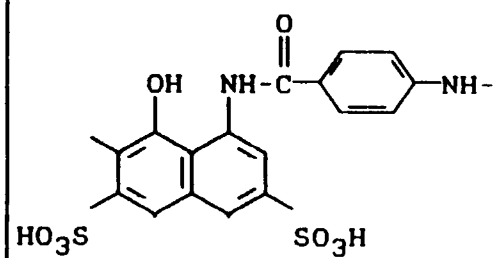 | $CH_3$ | $CH_2CH_2OH$ | blaustichig rot |
| 138 | 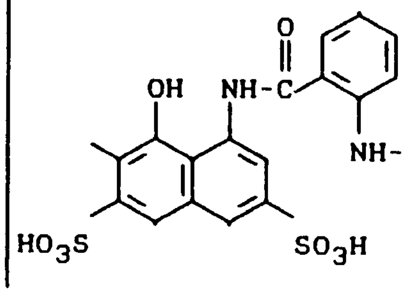 | $CH_3$ | $CH_2CH_2OH$ | blaustichig rot |

## Patentansprüche

1. Faserreaktive Azofarbstoffe der Formel (1)

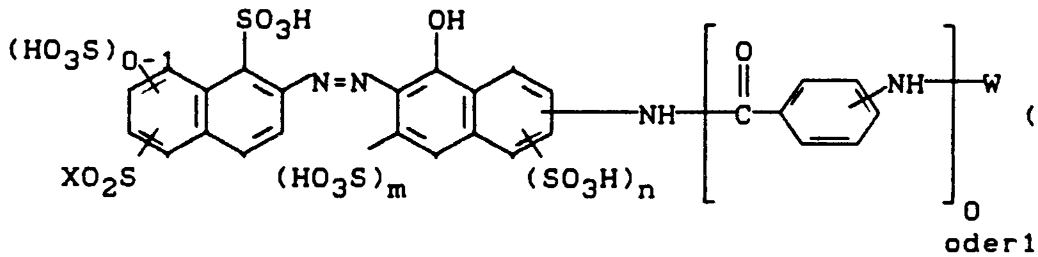
(1)

worin

m = 0 oder 1,

n = 0 oder 1, wobei m + n = 1 oder 2,

X = Vinyl, $CH_2CH_2$-Y, wobei Y einen unter alkalischen Bedingungen abspaltbaren Rest darstellt,

W = Rest der Formel

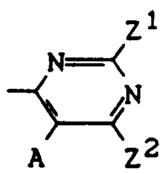
(2) oder
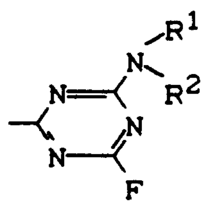
(3)

worin

A = H, Cl, Br, CN oder $C_1$-$C_4$-Alkylsulfonyl,

$Z^1$, $Z^2$ = unabhängig voneinander H, Cl, Br, F oder $C_1$-$C_4$-Alkylsulfonyl, wobei $Z^1$ und $Z^2$ nicht gleichzeitig für H oder $C_1$-$C_4$-Alkylsulfonyl stehen,

$R^1$ = H oder ein gegebenenfalls substituierter $C_1$-$C_4$-Alkyl- bzw. cycloaliphatischer Rest, und

$R^2$ = $R^1$ oder ein gegebenenfalls substituierter Benzyl-, Naphthyl- oder Hetarylrest, ein gegebenenfalls substituierter Phenylrest, der frei von $SO_3H$- oder $SO_2X$-Gruppen ist, oder eine gegebenenfalls substituierte Aminogruppe.

**2.** Farbstoffe des Anspruchs 1 der Formeln

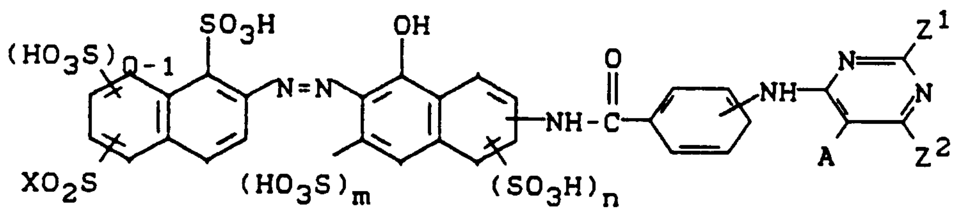
(4)

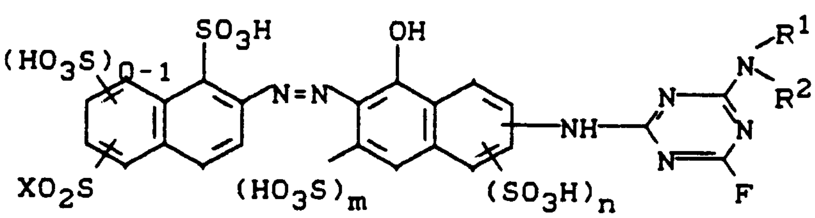
(5)

**3.** Farbstoffe des Anspruchs 1 der Formeln

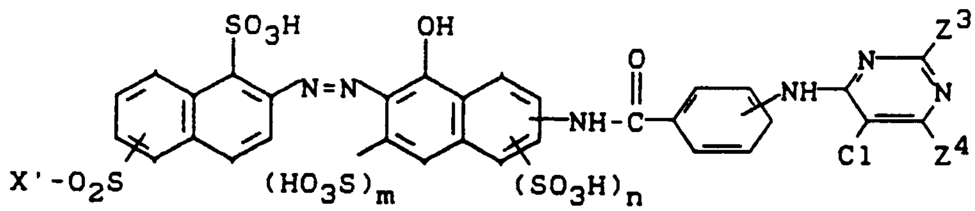

(6)

und

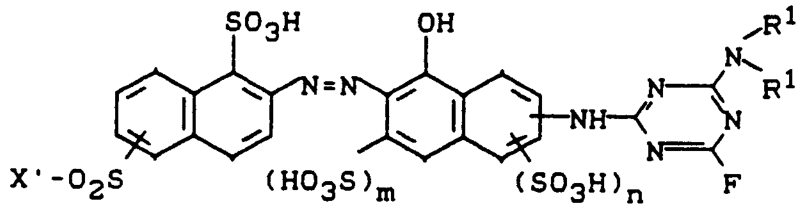

(7)

worin

X' = Vinyl oder $CH_2CH_2OSO_3H$

$Z^3$, $Z^4$ = unabhängig voneinander Cl oder F bedeutet.

**4.** Farbstoffe des Anspruchs 1 der Formeln

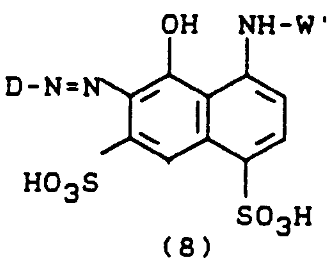

(8)

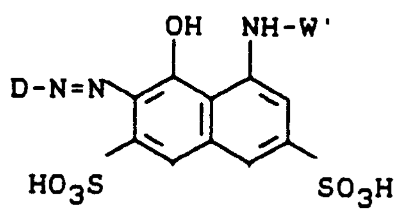

(9)

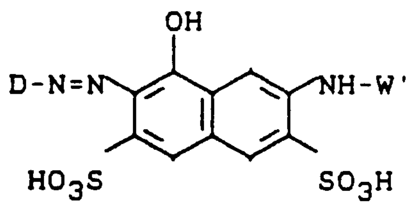

(10)

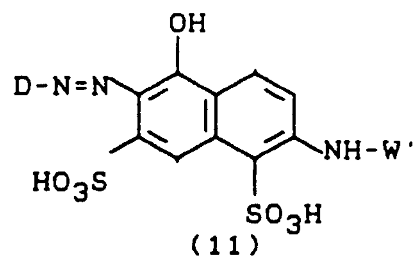

(11)

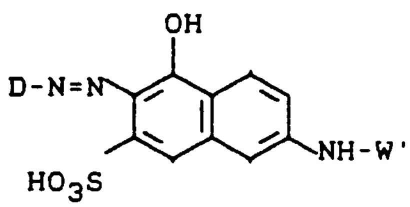

(12)

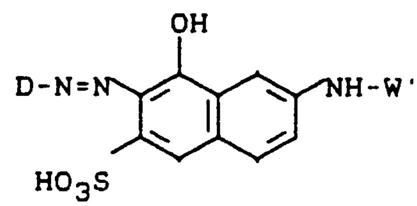

(13)

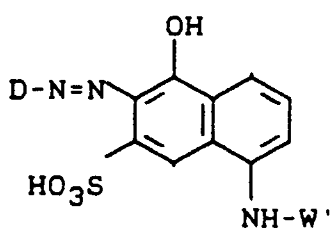

(14)

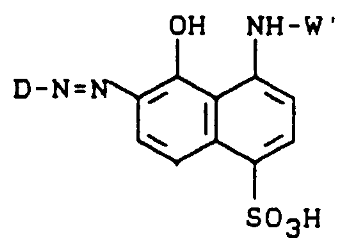

(15)

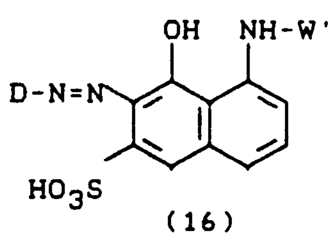

(16)

worin
D für

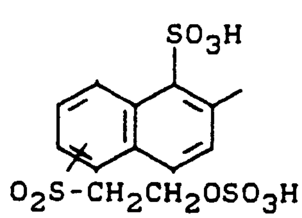

bzw.

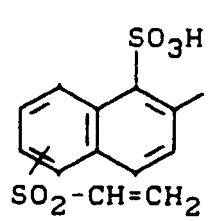

und W' für

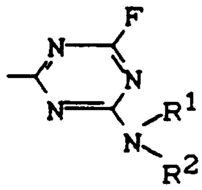

steht.

**5.** Farbstoffe des Anspruchs 4 mit $R^2 = R^1$.

**6.** Verwendung der Farbstoffe der Ansprüche 1 bis 5 zum Färben und Bedrucken von hydroxyl- und amidgruppenhaltigen Materialien.

**7.** Mit den Farbstoffen der Ansprüche 1 bis 5 gefärbte oder bedruckte hydroxyl- und amidgruppenhaltige Materialien.

**Claims**

**1.** Fibre-reactive azo dyestuffs of the formula (1)

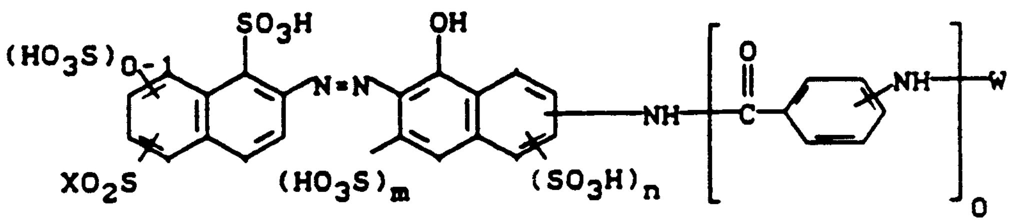

(1)

or

wherein

m = 0 or 1,
n = 0 or 1, with m + n = 1 or 2,
X = vinyl or $CH_2CH_2$-Y where Y represents a radical detachable under alkaline conditions,
W = radical of the formula

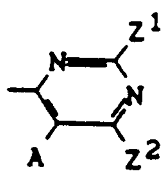

(2)

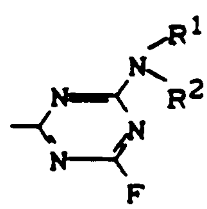

(3)

wherein

A = H, Cl, Br, CN or $C_1$-$C_4$-alkylsulphonyl,
$Z^1$, $Z^2$ = independently of each other H, Cl, Br, F or $C_1$-$C_4$-alkylsulphonyl although $Z^1$ and $Z^2$ do not simultaneously stand for H or $C_1$-$C_4$-alkylsulphonyl,
$R^1$ = H or an optionally substituted $C_1$-$C_4$-alkyl or cycloaliphatic radical, and
$R^2$ = $R^1$ or an optionally substituted benzyl, naphthyl or hetaryl radical, an optionally substituted phenyl radical which is free of $SO_3H$ or $SO_2X$ groups, or an optionally substituted amino group.

**2.** Dyestuffs of Claim 1 of the formulae

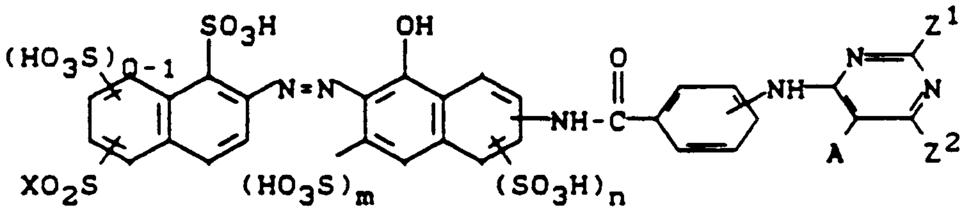

(4)

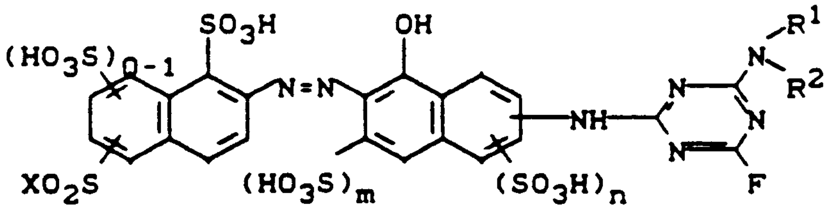

(5)

3. Dyestuffs of Claim 1 of the formulae

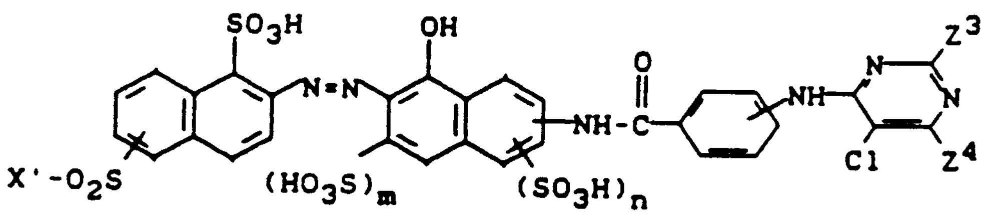

(6)

and

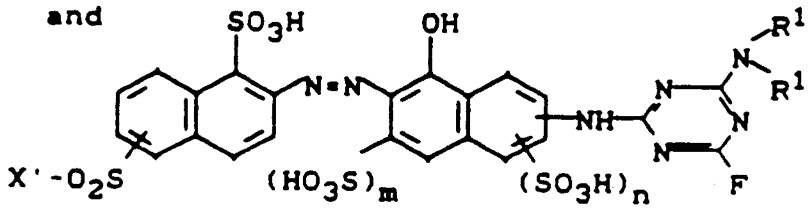

(7)

wherein

X' = vinyl or $CH_2CH_2OSO_3H$

$Z^3$, $Z^4$ = independently of each other Cl or F.

4. Dyestuffs of Claim 1 of the formulae

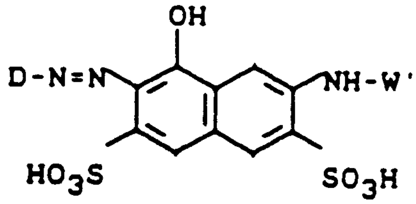

(10)

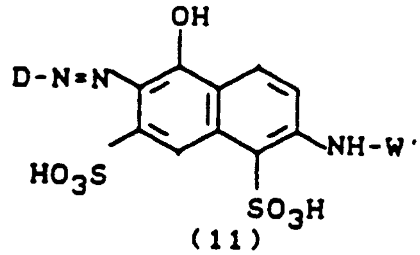

(11)

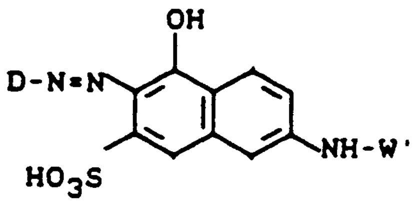

(12)

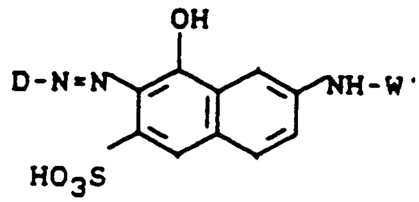

(13)

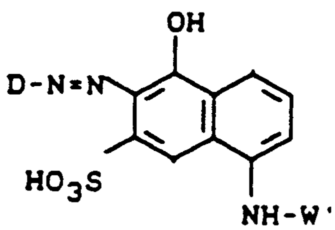

(14)

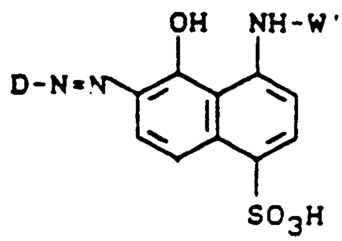

(15)

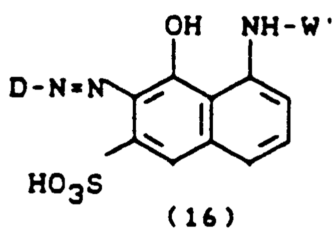

(16)

wherein
D stands for

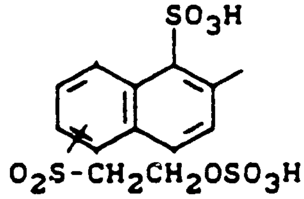

or

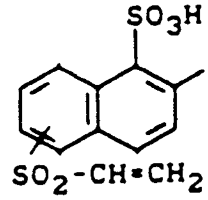

and W' stands for

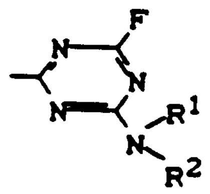

5. Dyestuffs of Claim 4 where $R^2 = R^1$.

6. Use of the dyestuffs of Claims 1 to 5 for dyeing and printing hydroxyl- and amido-containing materials.

7. Hydroxyl- and amido-containing materials dyed or printed with the dyestuffs of Claims 1 to 5.

**Revendications**

1. Colorants azoïques réactifs envers les fibres de formule (1)

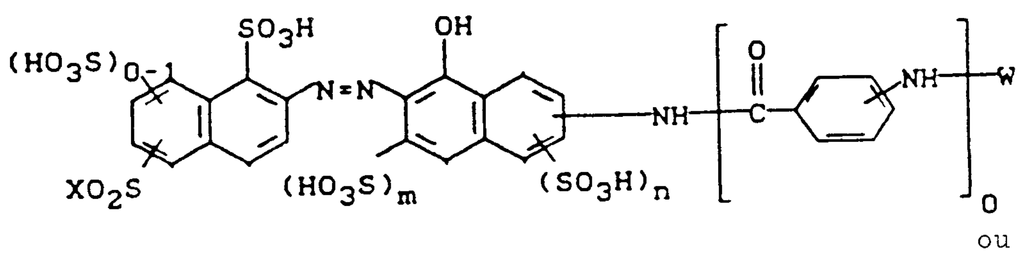 (1)

dans laquelle

- m a la valeur 0 ou 1,
- n a la valeur 0 ou 1, la somme m + n étant égale à 1 ou 2,
- X est un groupe vinyle, $CH_2CH_2$-Y, où Y est un reste éliminable dans des conditions alcalines,
- W est un reste de formule

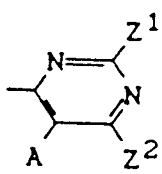 (2) ou 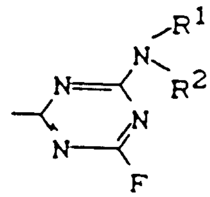 (3)

dans laquelle

- A représente H, Cl, Br, CN ou un groupe alkylsulfonyle en $C_1$ à $C_4$,
- $Z^1$, $Z^2$ représentent indépendamment l'un de l'autre H, Cl, Br, F ou un groupe alkylsulfonyle en $C_1$ à $C_4$, $Z^1$ et $Z^2$ ne représentant pas en même temps H ou un groupe alkylsulfonyle en $C_1$ à $C_4$,
- $R^1$ représente H ou un reste alkyle en $C_1$ à $C_4$ ou cycloaliphatique éventuellement substitué et
- $R^2$ représente $R^1$ ou est un reste benzyle, naphtyle ou hétaryle éventuellement substitué, un reste phényle éventuellement substitué qui est dépourvu de groupes $SO_3H$ ou $SO_2X$, ou un groupe amino éventuellement substitué.

2. Colorants suivant la revendication 1, de formules

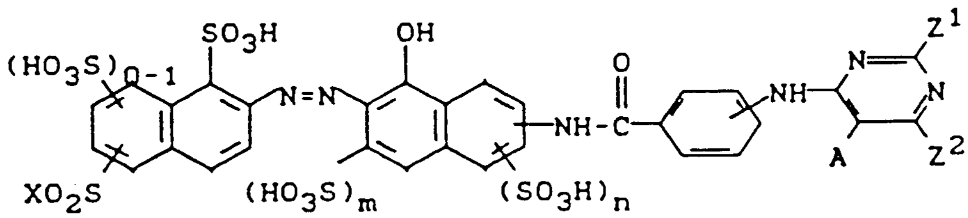

(4)

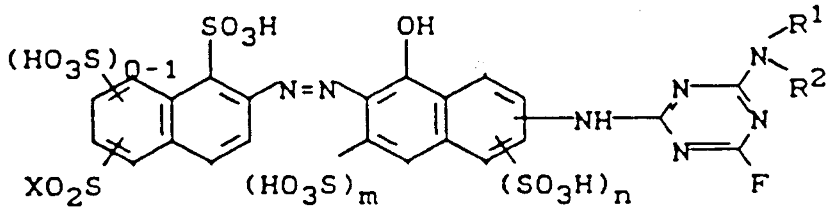

(5)

3. Colorants suivant la revendication 1, de formules

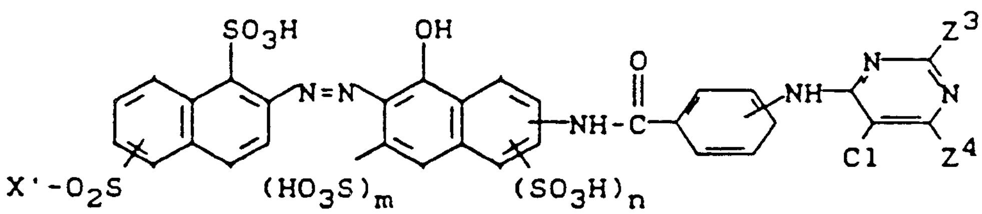

(6)

et

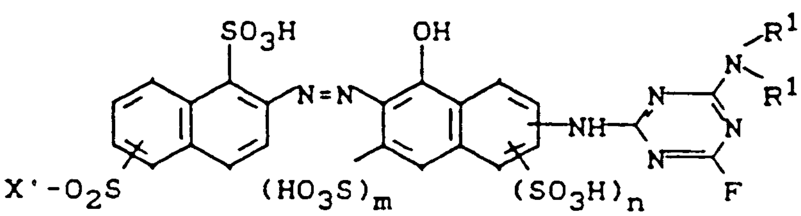

(7)

dans laquelle

X' est un groupe vinyle ou $CH_2CH_2OSO_3H$

$Z^3$, $Z^4$ représentent indépendamment l'un de l'autre Cl ou F.

4. Colorants suivant la revendication 1, de formules

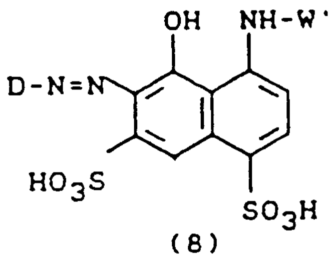

(8)

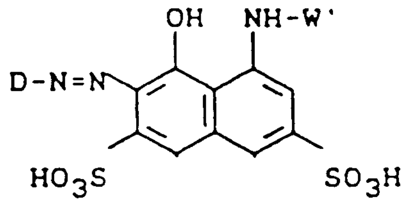

(9)

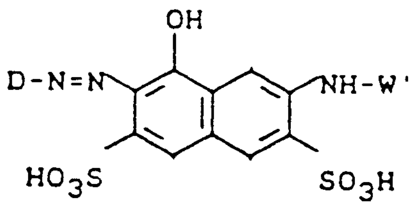

(10)

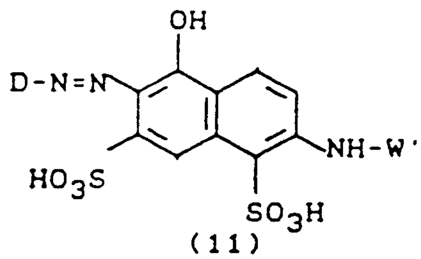

(11)

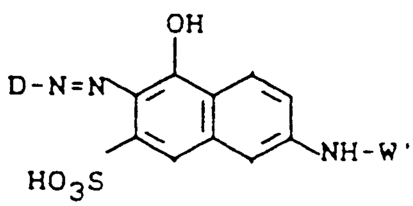

(12)

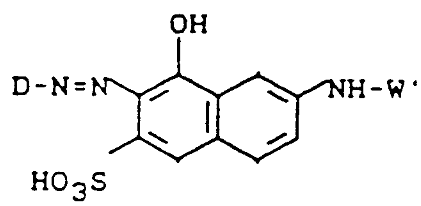

(13)

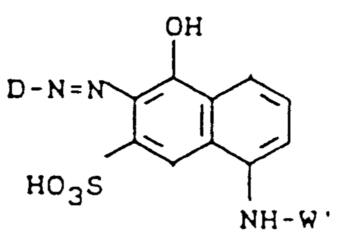

(14)

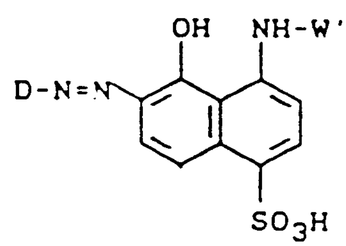

(15)

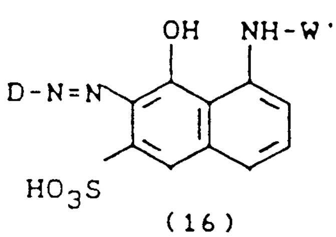

(16)

où

D représente

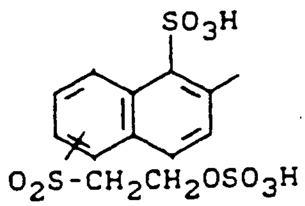 ou 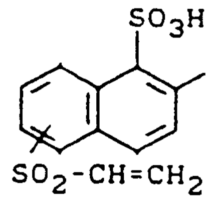

et W' représente

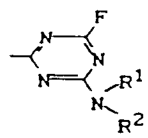

5. Colorants suivant la revendication 4, dans lesquels $R^2$ représente $R^1$.

6. Utilisation des colorants suivant les revendications 1 à 5 pour la teinture et l'impression de matières contenant des groupes hydroxyle et des groupes amide.

7. Matières contenant des groupes hydroxyle et des groupes amide teintes ou imprimées avec les colorants des revendications 1 à 5.